# EUROPÄISCHE PATENTSCHRIFT

(11) **EP 1 449 795 B1**
(45) Veröffentlichungstag und Bekanntmachung des Hinweises auf die Patenterteilung: **22.03.2006**
(21) Anmeldenummer: 04001148.8
(22) Anmeldetag: 21.01.2004
(51) Int. Cl.: B65G 1/04, B66F 9/07

(54) **Regalbediengerät**
Stacker crane
Transstockeur

(30) Priorität: 05.02.2003 DE 10304580
(43) Veröffentlichungstag der Anmeldung: 25.08.2004
(73) Patentinhaber: EISENMANN Maschinenbau GmbH & Co. KG, 71032 Böblingen (DE)
(72) Erfinder: Ehrenleitner, Franz, 70439 Stuttgart (DE); Dehm, Thomas, 72762 Reutlingen (DE)
(74) Vertreter: Ostertag, Ulrich

(56) Entgegenhaltungen:
- DE-A- 2 553 221
- DE-A- 10 217 161
- DE-B- 10 257 107
- US-A- 3 526 330

## Beschreibung

Die Erfindung betrifft ein Regalbediengerät mit
a) einem Tragwagen, der mittels eines Antriebs an mindestens einer im wesentlichen horizontalen Tragschiene entlang eines Regalganges verfahrbar ist;
b) einer von dem Tragwagen mitgeführten Hubplattform zur Aufnahme von Lagergut;
c) einer Hubvorrichtung, mit welcher die Hubplattform gegenüber dem Tragwagen in vertikaler Richtung bewegbar ist;
d) einer Stabilisierungseinrichtung, welche ein seitliches Auslenken der Hubplattform gegenüber dem Tragwagen verhindert.

Regalbediengeräte dieser Art dienen dazu, Lagergut in den Fächern von Hochregalen einzulagern und aus diesen wieder zu entnehmen. Die Hochregale erstrecken sich dabei entlang eines Regalganges, in dem das Regalbediengerät verfahrbar ist. Zur Erzielung eines hohen Umschlages des Lagergutes und damit zur Minimierung der für eine bestimmte Kapazität erforderliche Größe des Hochregallagers insgesamt sollte die Geschwindigkeit, mit welcher die Hubplattform von einer Position zur anderen verfahrbar ist, möglichst groß sein. Da die beschleunigte Masse und die Verbindungseinrichtung; über welche die Hubplattform mit dem Tragwagen verbunden ist, ein schwingungsfähiges System bilden, bedeutet eine hohe Beschleunigung regelmäßig auch die Gefahr von großen Schwingungen der Hubplattform.

Bekannte Regalbediengeräte der eingangs genannten Art weisen daher neben dem Tragwagen, der im allgemeinen auf dem Raumboden verfahrbar ist, zur Stabilisierung der Hubplattform eine massive Säule auf, an der die Hubplattform bei ihrer Vertikalbewegung geführt ist. Um die erforderliche Steifigkeit der Führungssäule zu erzielen, werden große Massen benötigt. Regalbediengeräte dieser Art können ein Gesamtgewicht von 25 Tonnen erreichen. Es ist klar, dass enorme Antriebsleistungen erforderlich sind, um diese Regalbediengeräte mit hohen Beschleunigungen betreiben zu können. Trotz der massiven Führungssäulen ergeben sich erhebliche Schwingungsprobleme, zumal die Eigenfrequenzen des schwingungsfähigen Systemes auf Grund der hohen Massen verhältnismäßig niedrig liegen.

Aufgabe der vorliegenden Erfindung ist es, ein Regalbediengerät der eingangs genannten Art derart auszugestalten, dass die Hubplattform sehr schnell beschleunigbar ist und Schwingungsprobleme minimiert sind.

Diese Aufgabe wird erfindungsgemäß dadurch gelöst, daß
e) die Hubvorrichtung für die Hubplattform mindestens zwei Zugmittel umfasst, an denen die Hubplattform von dem Tragwagen abgehängt ist;
f) die Stabilisierungseinrichtung umfasst:
   fa) mindestens ein.Führungsglied, welches sich parallel zum translatorischen Bewegungsweg der Hubplattform im wesentlichen horizontal erstreckt und mit welchem die Hubplattform ständig derart in Eingriff steht, daß ihre Position in Richtung der translatorischen Bewegung ständig definiert ist;
   fb) an beiden Enden des translatorischen Bewegungsweges der Hubplattform für jedes Führungsglied eine Hubvorrichtung vorgesehen ist, mit welcher das Führungsglied verbunden ist und die derart ausgebildet ist, daß sich das Führungsglied in im wesentlichen horizontaler Ausrichtung synchron mit der Hubplattform in vertikaler Richtung bewegt.

Erfindungsgemäß wird konsequent darauf geachtet, daß alle beschleunigten Massen des Regalbediengeräts, insbesondere die Masse der Hubvorrichtung für die Hubplattform und die Masse der Stabilisierungseinrichtung, so klein wie möglich sind. Kleine-Massen bedeuten geringe Kräfte und geringe Antriebsleistungen, die zur Beschleunigung der Hubplattform erforderlich sind. Durch schnelle Bewegung der Hubplattform lässt sich die Kapazität des Hochregallagers vergrößern bzw. dessen Dimensionen können bei konstanter Kapazität verringert werden. Da die beschleunigten Massen gleichzeitig Massen des oben schon erwähnten schwingungsfähigen Systemes sind, werden die Resonanzfrequenzen zu höheren Werten verschoben, wo sie leichter beherrschbar sind. Die erfindungsgemäß eingesetzte, aus mindestens zwei Zugmitteln bestehende Hubvorrichtung hat die denkbar geringste Masse. Gleiches gilt für die Stabilisierungseinrichtung, die nur aus dem mindestens einen Führungsglied und den diesem zugeordneten Nebenaggregaten besteht. Soweit das Führungsglied flexibel ist, kann es sehr straff gehalten werden, so daß die Federkonstante der Feder des schwingungsfähigen Systemes sehr groß und auch deshalb die Frequenz der Eigenschwingungen dieses Systemes sehr hoch ist.

Bei einer bevorzugten Ausführungsform der Erfindung steht die Hubplattform mit dem Führungsglied über mindestens einen Klemmrollenantrieb in Eingriff, der zwei unter Druck gegen gegenüberliegende Flächen des Führungsgliedes anliegende Klemmrollen aufweist, von denen mindestens eine so antreibbar ist, daß sich die Hubplattform synchron zum Tragwagen translatorisch bewegt. Bei dieser Ausführungsform besitzt die Hubplattform mit dem Klemmrollenantrieb gewissermaßen ihre eigene Antriebsquelle, die an dem in der Höhe mit der Hubplattform mitwandernden Führungsglied angreift.

Das Führungsglied ist bevorzugt ein flaches Band. Dieses wiegt zum einen verhältnismäßig wenig und kann zum anderen, wie oben schon erwähnt, sehr straff gespannt werden.

Alternativ kommt als Führungsglied jedoch auch besonders ein Seil in Betracht. In diesem Falle empfielt es sich zur Verbesserung des Reibungsschlusses, wenn mindestens eine Klemmrolle des Klemmrollenantriebes eine das Seil aufnehmende Nut besitzt.

Das Führungslied kann auch ein von der einen Hubvorrichtung zu der anderen Hubvorrichtung durchgehendes Seil sein, welches zwischen den Hubvorrichtungen reibungsschlüssig um eine angetriebene, von der Hubplattform getragene Seiltrommel geschlungen ist.

Bei einer alternativen Ausführungsform der Erfindung umfasst das Führungsglied zwei Seile, die sich jeweils von einer der beiden dem Führungsglied zugeordneten Hubvorrichtungen zu der Hubplattform erstrecken und jeweils auf eine angetriebene Seiltrommel derart aufwickelbar sind, daß sich die Hubplattform synchron zum Tragwagen translatorisch bewegt und beide Seile ständig straff sind. Auch hier können die Seiltrommeln als eigene Antriebsquelle für die Translationsbewegung der Hubplattform verstanden werden, wobei durch die Straffung der beiden Seile ein seitliches Ausschwenken der Hubplattform verhindert wird.

Als Hubvorrichtung für das Führungsglied kann ein Endlosband mit einem vertikal verlaufenden Trum vorgesehen sein, an dem jeweils ein Ende des Führungsgliedes festgelegt ist. Sofern das Führungsglied nicht sehr lang ist und das Endlosband reibungsarm läuft, ist es nicht unbedingt erforderlich, eine der Umlenkrollen des Endlosbandes anzutreiben. Vielmehr nimmt in diesem Falle der Hubwagen das Endlosband bei seiner Vertikalbewegung mit.

Im allgemeinen empfiehlt es sich jedoch, wenn das Endlosband antreibbar ist.

Bei einer bevorzugten Ausführungsform der Erfindung ist zumindest das vertikal verlaufende Trum des Endlosbandes innerhalb eines vertikal verlaufenden Führungsprofiles angeordnet und mit dem zugeordneten Ende des Führungsgliedes über eine Verbindungseinrichtung verbunden, die mindestens eine Führungsrolle aufweist, wobei die Führungsrolle an einer inneren Fläche des Führungsprofiles abrollt. Unter einer "inneren" Fläche wird dabei eine solche Fläche des Führungsprofiles verstanden, die in eine Richtung zeigt, die der Erstreckungsrichtung des Führungsgliedes entgegengesetzt ist. Die Zugkraft des gespnannten Führungsgliedes wird auf diese Weise über die Führungsrolle in das Führungsprofil eingeleitet.

Besonders stabile Verhältnisse für die Hubplattform ergeben sich, wenn zwei parallel zueinander verlaufende Führungsglieder vorgesehen sind, welche synchron miteinander und mit der Hubplattform vertikal bewegbar sind.

Aus Gewichtsgründen ist vorzuziehen, wenn die Zugmittel, an denen die Hubplattform von dem Tragwagen abgehängt ist, flexibel, insbesondere Seile, Bänder oder Ketten sind.

Ein Ausführungsbeispiel der Erfindung wird nachfolgend anhand der Zeichnung näher erläutert; es zeigen
- Figur 1: perspektivisch von rechts oben gesehen ein erfindungsgemäßes Regalbediengerät vor einem Hochregal;
- Figur 2: in etwas größerem Maßstab perspektivisch von links unten gesehen das Regalbediengerät von Figur 1;
- Figur 3: die Seitenansicht des Regalbediengerätes von Figur 1 und 2;

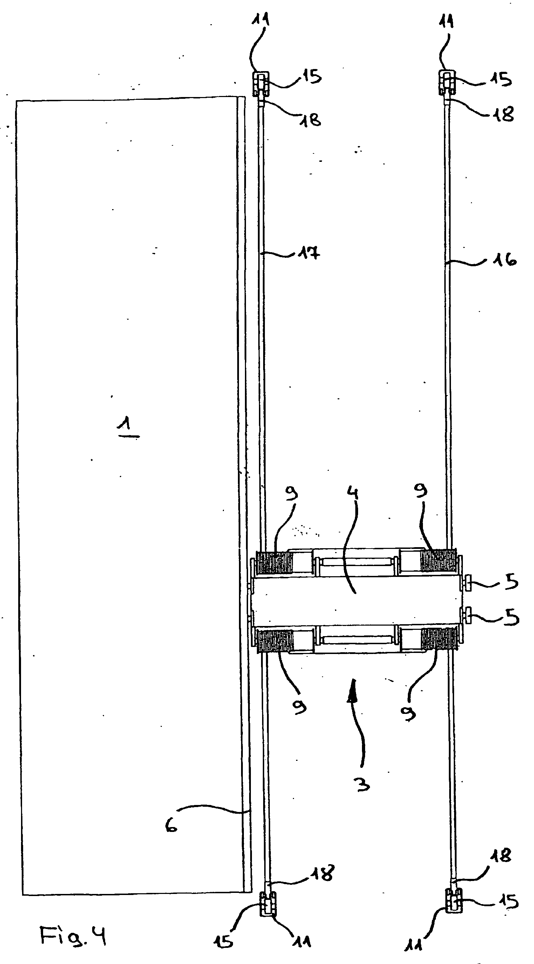

- Figur 4: die Draufsicht auf das Regalbediengerät der Figuren 1 bis 3;

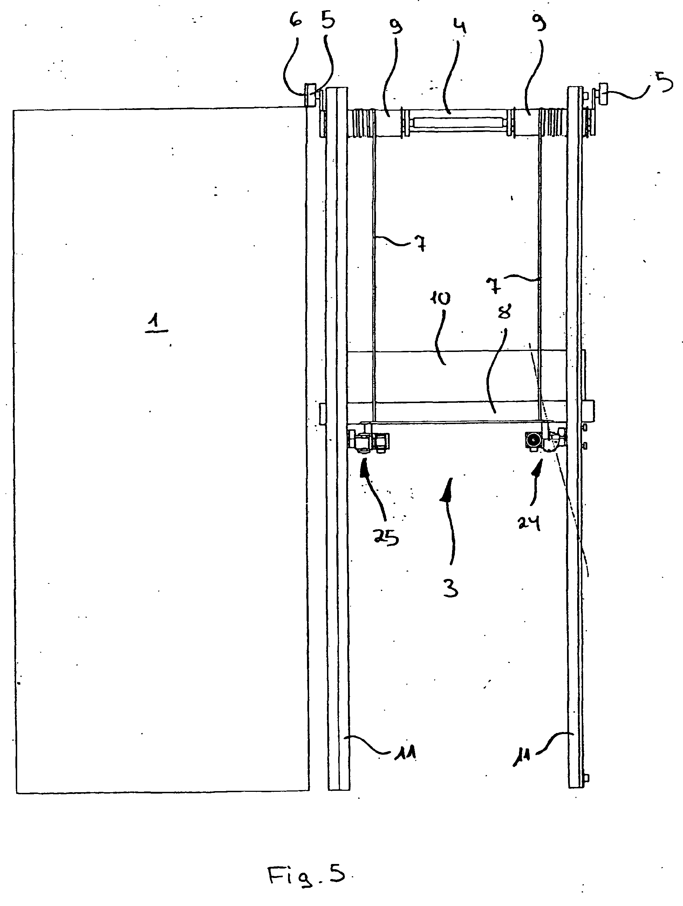

- Figur 5: die Stirnansicht des Regalbediengerätes der Figuren 1 bis 4, gesehen in Figuren 1 und 3 von links;
- Figur 6: die Detailansicht einer Spannvorrichtung für ein horizontales Führungsband, das bei dem Regalbediengerät der Figuren 1 bis 5 Verwendung findet.

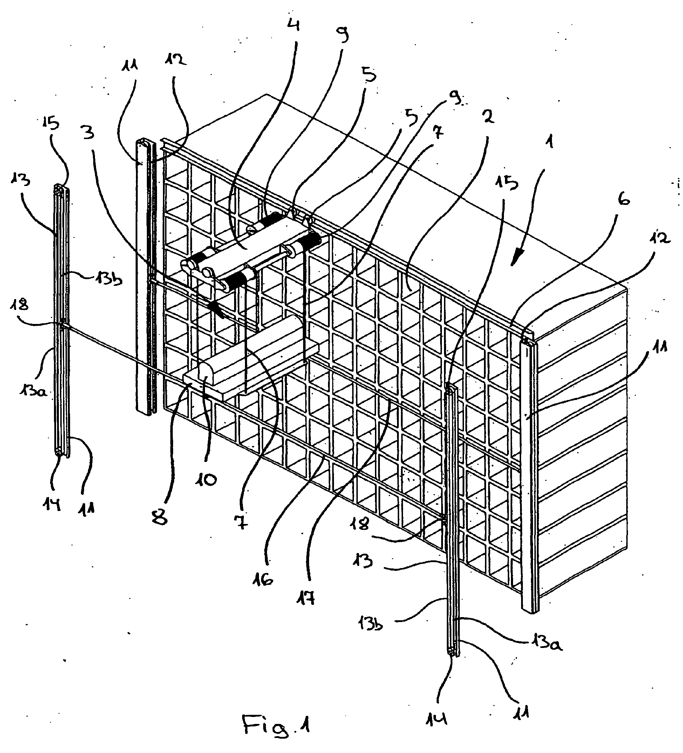

In der Zeichnung ist mit dem Bezugszeichen 1 ein konventionelles Hochregal gekennzeichnet, das aus einem Stahlbau besteht und eine Vielzahl von Regalfächern 2 aufweist, in denen Lagergut 10 gelagert werden kann. Das Einlagern von Lagergut 10 in die Regalfächer 2 bzw. das Entnehmen von Lagergut 10 aus diesen Regalfächern 2 wird durch ein Regalbediengerät 3 besorgt, das in einem Regalgang zwischen dem in Figur 1 dargestellten Hochregal 1 und einem parallel vor diesem zu denkenden entsprechenden Hochregal verfahrbar ist.

Das Regalbediengerät 3 umfasst einen Tragwagen 4, der auf gegenüberliegenden Seiten mit jeweils einem Paar angetriebener Tragrollen 5 versehen ist. Jedes Paar von Tragrollen 5 läuft in einer Tragschiene 6, die am oberen Rande des entsprechenden Hochregales 1 befestigt ist und im wesentlichen horizontal verläuft.

Über vier Seile 7 ist von dem Tragwagen 4 eine Hubplattform 8 abgehängt. Angetriebene Seiltrommeln 9 an dem Tragwagen 4 nehmen den oberen Endbereich der Seile 7 auf, so daß durch Auf- bzw. Abwickeln der Seile 7 auf den Seiltrommeln 9 die Höhenposition der Hubplattform 8 gegenüber dem Tragwagen 4 verändert werden kann.

Die Hubplattform 8 trägt das Lagergut 10 und kann entsprechend den Befehlen einer Steuerung durch eine horizontale Translationsbewegung des Tragwagens 4 und eine Vertikalbewegung gegenüber dem Tragwagen 4 vor jedes Regalfach 2 gefahren werden, um dort Lagergut 10 entweder ein- oder auszulagern.

Der Transport des Lagergutes 10 zu den Zielpositionen sollte so schnell wie möglich erfolgen. Dies bedeutet, daß der Tragwagen 4 mit der von ihm mitgeführten Hubplattform 8 möglichst schnell auf hohe Geschwindigkeiten beschleunigt und wieder abgebremst werden muß. Um zu verhindern, daß bei diesen Bewegungsvorgängen die Hubplattform 8 seitlich ausgelenkt wird, insbesondere ins Schwingen kommt, ist eine Stabilisierungseinrichtung vorgesehen. Diese umfasst an beiden seitlichen Enden des Hochregales 1 zwei vertikale, hohle Führungsprofile 11, deren Querschnitts-Grundform ein Rechteck ist. Die aufeinander zu weisenden Seiten der Führungsprofile 11 sind von jeweils einem vertikalen Schlitz 12 durchzogen.

Die in Figur 1 näher zum Betrachter stehenden Führungsprofile 11 sind nur mit ihrer hinteren Hälfte dargestellt. Auf diese Weise ist sichtbar, daß im Innenraum der Führungsprofile 11 jeweils ein Endlosband 13 mit langgestreckten, parallelen vertikalen Trumms 13a, 13b angeordnet ist, das oben und unten jeweils um eine Umlenkrolle 14 bzw. 15 verläuft. Eine dieser Umlenkrollen 14, 15, beispielsweise die untere Umlenkrolle 14, ist angetrieben.

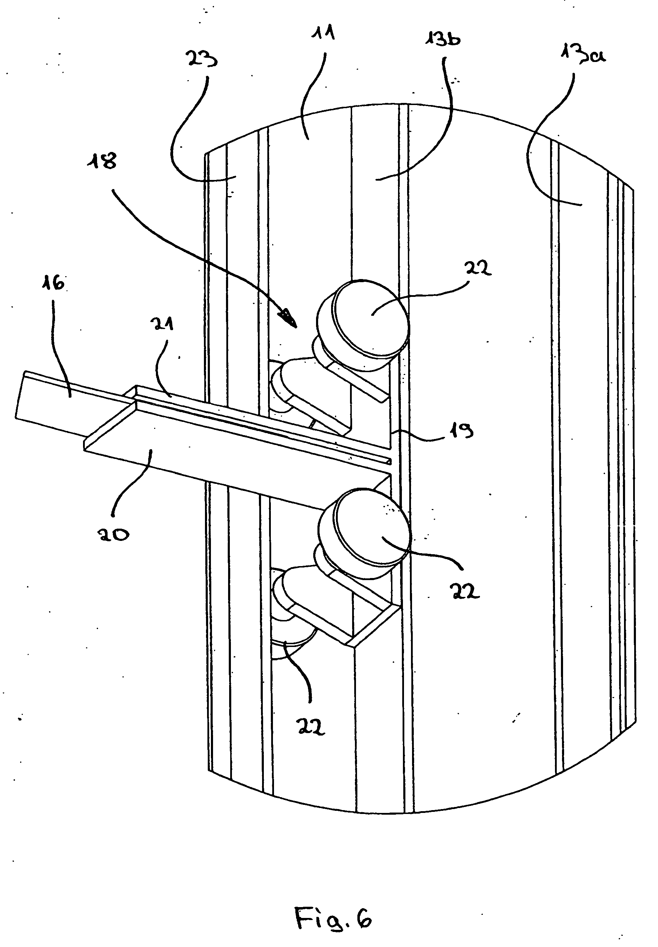

Zwischen den Paaren von Endlosbändern 13 auf gegenüberliegenden Seiten des Hochregales 1 verlaufen zwei im wesentlichen horizontale Führungsbänder 16, 17, die mit der in Figur 6 dargestellten Klemmvorrichtung 18 an den entsprechenden Endlosbändern 13 befestigt sind. Diese Klemmvorrichtung 18 umfasst an einem Basisteil 19, welches vertikal verläuft und mit dem Endlosband 13 in nicht dargestellter Weise verbunden ist, zwei parallele horizontale Klemmflansche 20, 21, zwischen denen das Ende des Führungsbandes 16 festgelegt ist und die sich jeweils durch den Schlitz 12 des Führungsprofiles 11 hindurch erstrecken. Das Basisteil 19 trägt außerdem oberhalb und unterhalb der Klemmflansche 21 innerhalb des Führungsprofiles 11 zwei Paare von Führungsrollen 22, die jeweils auf den seitlich von dem Schlitz 12 liegenden Führungsflanschen 23 des Führungsprofiles 11 (in Figur 6 ist nur einer dieser Führugsflansche 23 dargestellt) abrollen. Mit Hilfe der Klemmvorrichtungen 18 werden die sich zwischen gegenüberliegenden Führungsprofilen 11 erstreckenden Führungsbänder 16, 17 straff in horizontaler Ausrichtung gehalten.

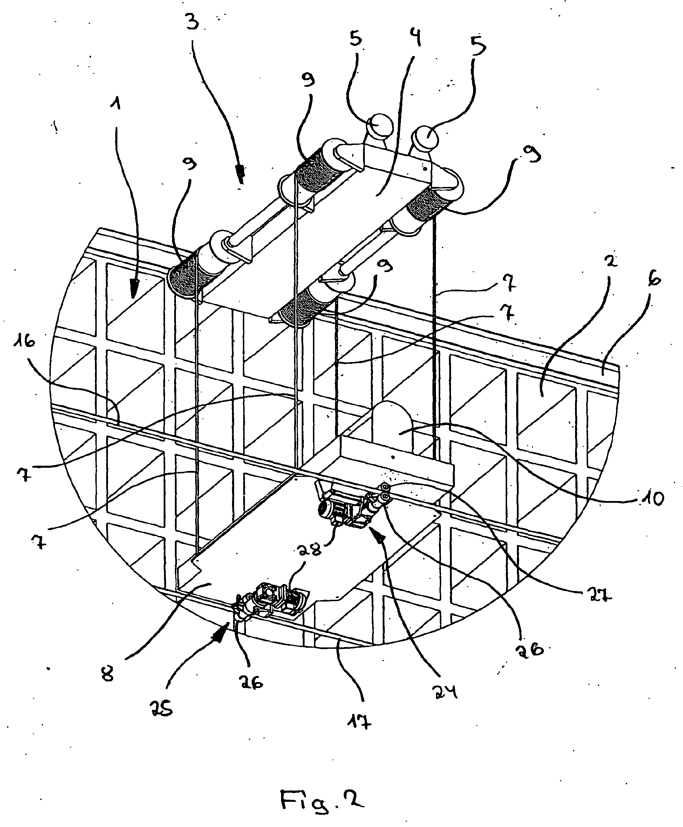

Wie insbesondere der Figur 2 zu entnehmen ist, befinden sich an der Unterseite der Hubplattform 8 zwei Klemmrollenantriebe 24, 25, von denen der eine (24) mit dem Führungsband 16 und der andere (25) mit dem Führungsband 17 zusammenarbeitet. Jeder Klemmrollenantrieb 24, 25 umfasst zwei Klemmrollen 26, 27, die an gegenüberliegenden Seiten des zugeordneten Führungsbandes 16 bzw. 17 unter entsprechendem Klemmdruck anliegen. Mindestens eine dieser Klemmrollen 26, 27 ist von einem Getriebemotor 28 angetrieben. Die Mantelfläche der Klemmrollen 26, 27 besteht aus einem Material, das einen guten Reibungsschluß zur Oberfläche des entsprechenden Führungsbandes 16, 17 gewährleistet.

Der Antrieb, der die Horizontalbewegung des Tragwagens 4 besorgt, die Antriebe, welche die Seiltrommeln 9 betätigen, die Antriebe, welche die Umlenkrollen 14 in Bewegung setzen sowie die Getriebemotoren 28 sind mit einer zentralen Steuerung der Anlage verbunden und erhalten von dieser ihre Befehle.

Die Funktion des oben beschriebenen Regalbediengerätes 3 ist wie folgt:

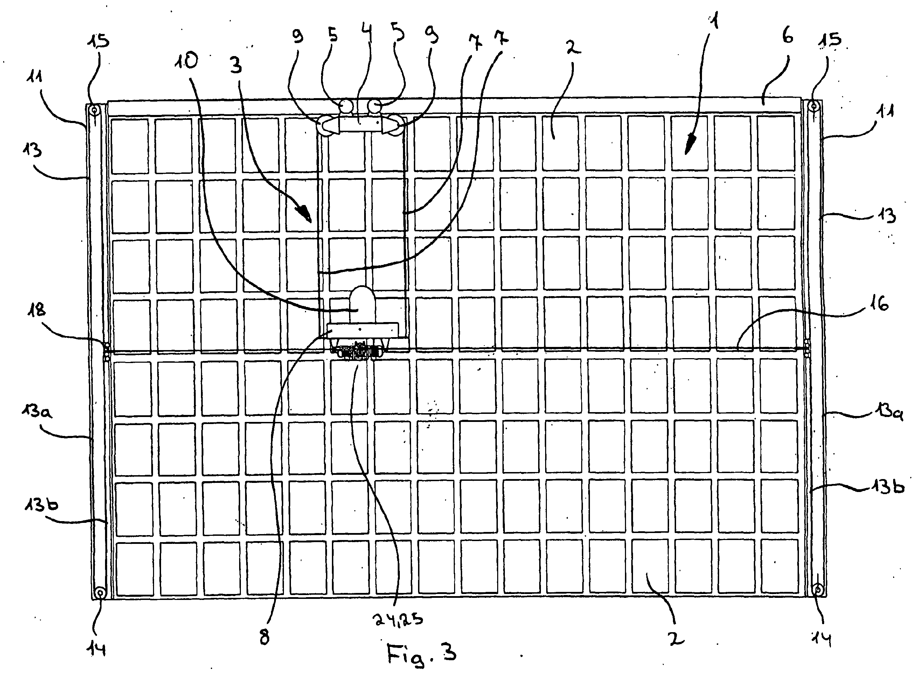

Zunächst sei angenommen, daß die Hubplattform 8 beispielsweise aus der in den Figuren 1 bis 3 dargestellten Position eine reine Horizontalbewegung nach rechts durchführen soll. Hierzu wird der Translationsantrieb des Tragwagens 4 entsprechend in Funktion gesetzt. Gleichzeitig bestromt die Anlagensteuerung die Getriebemotoren 28 so, daß die Hubplattform 8 synchrom zum Tragwagen 4 entlang der Führungsbänder 16, 17 ebenfalls nach rechts bewegt wird, wobei die Seile 7 und die Führungsbänder 16, 17 ihre vertikale Ausrichtung bewahren. Eine Pendelbewegung der Hubplattform 8 gegenüber dem Tragwagen 4 ist hierdurch zuverlässig ausgeschlossen.

Soll die Hubplattform 8 aus der in den Figuren 1 bis 3 dargestellten Position ausschließlich vertikal abgesenkt werden, so bestromt die Anlagensteuerung die Antriebe der Seiltrommeln 9 entsprechend, so daß die freien Abschnitte der Seile 7 länger werden. Gleichzeitig werden die Umlenkrollen 14 durch die Anlagensteuerung in dem Sinne verdreht, daß sich die nach innen zeigenden Trums 13b der Endlosbänder 13 synchron mit der Hubplattform 8 nach unten bewegen. Der Translationsantrieb des Tragwagens 4 bleibt bei diesem Vorgang ebenso wie die Getriebemotoren 28 der Klemmrollenantriebe 24, 25 unbestromt. Ergebnis ist die gewünschte reine Vertikalbewegung der Hubplattform 8, bei welcher durch die Führungsbänder 16, 17 wieder jede seitliche Auslenkung, insbesondere ein Schwingen, zuverlässig verhindert wird.

Ein allgemeiner Bewegungsvorgang der Hubplattform 8, bei der diese sowohl eine Translations- als auch eine Vertikalbewegung ausführt, ergibt sich aus einer Überlagerung der oben beschriebenen reinen Translations- und reinen Vertikalbewegung, so daß eine Beschreibung entbehrlich ist.

Bei einem in der Zeichnung nicht dargestellten Ausführungsbeispiel sind die flexiblen Führungsbänder 16, 17 durch verhältnismäßig starre Stangen bzw. Profile ersetzt. Die Funktionsweise bleibt dieselbe; allerdings haben die Führungsstangen bzw. -profile ein etwas höheres Gewicht als die beim in der Zeichnung dargestellten Ausführungsbeispiel eingesetzten Führungsbänder 16, 17. Statt Führungsbändern 16, 17 können auch Führungsseile verwendet werden, die dann allerdings nicht durchgängig zwischen gegenüberliegenden Führungsproflien 11 bzw. den in diesen verlaufenden Endlosbändern 13 verspannt sind, sondern im Bereich der Hubplattform 8 unterbrochen und dort auf Seiltrommeln aufwickelbar sind. Durch entsprechende Bestromungen dieser Seiltrommeln wird bei einer Translationsbewegung der Hubplattform 8 wieder dafür gesorgt, daß diese ständig vertikal unterhalb des Tragwagens 4 verbleibt.

Ein weiteres in der Zeichnung nicht dargestelltes Ausführungsbeipiel eines Regalbediengerätes besitzt ein Führungsglied in Form eines durchgehenden Seiles, das zwischen den beiden Hubvorrichtungen verspannt ist. Im zwischen den beiden Hubvorrichtungen liegenden Bereich umschlingt dieses Seil eine antreibbare Seiltrommel, die von der Hubplattform mitgeführt wird. Es kann ausreichen, die Umschlingung nur über einen Teil des Umfanges der Seiltrommel zu führen, wenn die Reibung zwischen der Mantelfläche der Seiltrommel und dem Seil ausreicht, einen Schlupf weitgehend zu verhindern ("Omega-Umschlingung"). In vielen Fällen ist es jedoch sicherer, das Seil ein oder mehrere Male vollständig um die Seiltrommel zu schlingen.

Die Seiltrommel wird bei einer Translationsbewegung des Tragwagens so angetrieben, daß sich die Hubplattform synchron zu dem Tragwagen an dem Seil voranzieht und die Hubplattform ständig vertikal unterhalb des Tragwagens verbleibt.

Sofern die Länge des Hochregales 1 und daher auch die Länge der Führungsglieder 16, 17 gering ist, kann auf einen Antrieb der Umlenkrollen 14 innerhalb der Führungsprofile 11 verzichtet werden.

## Patentansprüche

1. Regalbediengerät mit
a) einem Tragwagen, der mittels eines Antriebs an mindestens einer im wesentlichen horizontalen Tragschiene entlang eines Regalganges verfahrbar ist;
b) einer von dem Tragwagen mitgeführten Hubplattform zur Aufnahme des Lagergutes;
c) einer Hubvorrichtung, mit welcher die Hubplattform gegenüber dem Tragwagen in vertikaler Richtung bewegbar ist;
d) einer Stabilisierungseinrichtung, welche ein seitliches Ausschwenken der Hubplattform verhindert,
**dadurch gekennzeichnet, daß**
e) die Hubvorrichtung für die Hubplattform (8) mindestens zwei Zugmittel (7) umfasst, an denen die Hubplattform (8) von dem Tragwagen (4) abgehängt ist;
f) die Stabilisierungseinrichtung umfasst:
fa) mindestens ein Führungsglied (16, 17), welches sich parallel zum translatorischen Bewegungsweg der Hubplattform (8) im wesentlichen horizontal erstreckt und mit welcher die Hubplattform (8) ständig derart in Eingriff steht, daß ihre Position in Richtung der translatorischen Bewegung ständig definiert ist;
fb) an beiden Enden des translatorischen Bewegungsweges der Hubplattform (8) für jedes Führungsglied (16, 17) eine Hubvorrichtung (13) vorgesehen ist, mit welcher das Führungsglied (16, 17) verbunden ist und das derart ausgebildet ist, daß sich das Führungsglied (16, 17) in im wesentlichen horizontaler Ausrichtung synchrom mit der Hubplattform (8) in vertikaler Richtung bewegt.

2. Regalbediengerät nach Anspruch 1, **dadurch gekennzeichnet, daß** die Hubplattform (8) mit dem Führungsglied (16, 17) über mindestens einen Klemmrollenantrieb (24, 25) in Eingriff steht, der zwei unter Druck gegen gegenüberliegende Flächen des Führungsgliedes (16, 17) anliegende Klemmrollen (26, 27) aufweist, von denen mindestens eine (26) so antreibbar ist, daß sich die Hubplattform (8) synchron zum Tragwagen (4) translatorisch bewegt.

3. Regalbediengerät nach Anspruch 2, **dadurch gekennzeichnet, daß** das Führungsglied (16, 17) ein flaches Band ist.

4. Regalbediengerät nach Anspruch 2, **dadurch gekennzeichnet, daß** das Führungsglied ein Seil ist.

5. Regalbediengerät nach Anspruch 4, **dadurch gekennzeichnet, daß** mindestens eine Klemmrolle eine das Seil aufnehmende Nut besitzt.

6. Regalbediemnhgerät nach Annspruch 1, **dadurch gekennzeichnet, daß** das Führungsglied ein von der einen Hubvorrichtung zur anderen Hubvorrichtung durchgehendes Seil ist, welches zwischen den Hubvorrichtungen reibungsschlüssig um eine angetriebene, von der Hubplattform getragene Seiltrommel geschlungen ist.

7. Regalbediengerät nach Anspruch 1, **dadurch gekennzeichnet, daß** das Führungsglied zwei Seile umfasst, die sich jeweils von einer der beiden dem Führungsglied zugeordneten Hubvorrichtungen zu der Hubplattform erstrecken und jeweils auf eine angetriebene Seiltrommel derart aufwickelbar sind, daß sich die Hubplattform synchron zum Tragwagen translatorisch bewegt und beide Seile ständig straff sind.

8. Regalbediengerät nach einem der vorhergehenden Ansprüche, **dadurch gekennzeichnet, daß** die Hubvorrichtungen für das Führungsglied (16, 17) ein Endlosband (13) mit einem vertikal verlaufenden Trum (13b) umfassen, an dem jeweils ein Ende des Führungsglieds (16, 17) festgelegt ist.

9. Regalbediengerät nach Anspruch 8, **dadurch gekennzeichnet, daß** das Endlosband (13) antreibbar ist.

10. Regalbediengerät nach Anspruch 8 oder 9, **dadurch gekennzeichnet, daß** zumindest das vertikal verlaufende Trum (13b) des Endlosbands (13) innerhalb eines vertikal verlaufenden Führungsprofils (11) angeordnet ist und mit dem zugeordneten Ende des Führungsgliedes (16, 17) über eine Verbindungseinrichtung (18) verbunden ist, die mindestens eine Führungsrolle (22) aufweist, wobei die Führungsrolle (22) an einer inneren Fläche des Führungsprofils (11) abrollt.

11. Regalbediengerät nach einem der vorhergehenden Ansprüche, **dadurch gekennzeichnet, daß** zwei parallel zueinander verlaufende Führungsglieder (16, 17) vorgesehen sind, welche synchron miteinander und mit der Hubplattform (8) vertikal bewegbar sind.

12. Regalbediengerät nach einem der vorhergehenden Ansprüche, **dadurch gekennzeichnet, daß** die Zugmittel (7), an denen die Hubplattform (8) von dem Tragwagen (4) abgehängt ist, flexibel, insbesondere Seile, Bänder oder Ketten sind.

## Claims

1. A rack serving apparatus having
a) a support carriage which may be moved along a rack aisle by means of a drive on at least one substantially horizontal carrying rail;
b) a lifting platform which is carried along by the support carriage for the purpose of receiving the warehouse goods;
c) a lifting device by means of which the lifting platform may be moved in the vertical direction with respect to the support carriage;
d) a stabilising device which prevents the lifting platform from swinging out laterally,
**characterised in that**
e) the lifting device for the lifting platform (8) comprises at least two traction means (7) by which the lifting platform (8) is suspended from the support carriage (4);
f) the stabilising device comprises:
fa) at least one guide element (16, 17), which extends substantially horizontally parallel to the translatory movement path of the lifting platform (8) and with which the lifting platform (8) is in constant engagement in such a way that its position in the direction of the translatory movement is constantly defined;
fb) provided at both ends of the translatory movement path of the lifting platform (8), there is a lifting device (13) for each guide element (16, 17), which is connected to the guide element (16, 17) and is constructed in such a way that the guide element (16, 17) moves synchronously with the lifting platform (8) in the vertical direction in substantially horizontal alignment.

2. A rack serving apparatus according to Claim 1, **characterised in that** the lifting platform (8) is in engagement with the guide element (16, 17) by way of at least one clamp-roller drive (24, 25) having two clamp rollers (26, 27) which abut under pressure against opposite faces of the guide element (16, 17) and of which at least one (26) may be driven such that the lifting platform (8) executes a translatory movement synchronously with the support carriage (4).

3. A rack serving apparatus according to Claim 2, **characterised in that** the guide element (16, 17) is a flat belt.

4. A rack serving apparatus according to Claim 2, **characterised in that** the guide element is a cable.

5. A rack serving apparatus according to Claim 4, **characterised in that** at least one clamp roller has a groove for receiving the cable.

6. A rack serving apparatus according to Claim 1, **characterised in that** the guide element is a cable which extends from one lifting device to the other lifting device and, between the lifting devices, is wound with frictional fit around a driven cable drum carried by the lifting platform.

7. A rack serving apparatus according to Claim 1, **characterised in that** the guide element comprises two cables which each extend to the lifting platform from one of the two lifting devices associated with the guide element and may each be wound onto a driven cable drum in such a way that the lifting platform executes a translatory movement synchronously with the support carriage and both cables are constantly taut.

8. A rack serving apparatus according to one of the preceding claims, **characterised in that** the lifting devices for the guide element (16, 17) comprise an endless belt (13) having a vertically extending strand (13b) to which a respective end of the guide element (16, 17) is fixed.

9. A rack serving apparatus according to Claim 8, **characterised in that** the endless belt (13) may be driven.

10. A rack serving apparatus according to Claim 8 or 9, **characterised in that** at least the vertically extending strand (13b) of the endless belt (13) is arranged within a vertically extending guide profile (11) and is connected to the associated end of the guide element (16, 17) by way of connecting means (18) which has at least one guide roller (22), the guide roller (22) rolling along an inner face of the guide profile (11).

11. A rack serving apparatus according to one of the preceding claims, **characterised in that** two guide elements (16, 17) extending parallel to one another are provided, which may be moved vertically such that they are synchronous with one another and with the lifting platform (8).

12. A rack serving apparatus according to one of the preceding claims, **characterised in that** the traction means (7) by which the lifting platform (8) is suspended from the carriage (4) are flexible, in particular cables, belts or chains.

## Revendications

1. Transstockeur, avec
a) un chariot porteur, qui au moyen d'un entraînement peut être déplacé le long d'un couloir entre rayonnages sur au moins un rail porteur sensiblement horizontal ;
b) une plate-forme de levage, emportée par le chariot porteur et destinée à recevoir les marchandises entreposées ;
c) un dispositif de levage, avec lequel la plate-forme de levage peut être déplacée en direction verticale par rapport au chariot porteur,
d) un équipement stabilisateur, qui empêche un balancement latéral de la plate-forme de levage,
**caractérisé en ce que**
e) le dispositif de levage pour la plate-forme de levage (8) comprend au moins deux moyens de traction (7), par lesquels la plate-forme de levage (8) est suspendue au chariot porteur (4) ;
f) l'équipement stabilisateur comprend :
fa) au moins un élément de guidage (16, 17), qui s'étend sensiblement horizontalement parallèlement à la voie de déplacement en translation de la plate-forme de levage (8) et avec lequel la plate-forme de levage (8) est en engagement en permanence de telle sorte que sa position dans la direction du mouvement de translation est définie en permanence ;
fb) un dispositif de levage (13) qui est prévu aux deux extrémités de la voie de déplacement en translation de la plate-forme de levage (8) pour chaque élément de guidage (16, 17), dispositif auquel est relié l'élément de guidage (16, 17) et qui est conçu de telle sorte que l'élément de guidage (16, 17) se déplace en direction verticale en synchronisme et en alignement sensiblement horizontal avec la plate-forme de levage (8).

2. Transstockeur selon la revendication 1, **caractérisé en ce que** la plate-forme de levage (8) est en engagement avec l'élément de guidage (16, 17) au moyen d'au moins un entraînement (24, 25) à galets de serrage qui présente deux galets de serrage (26, 27) appliqués sous pression contre des faces opposées de l'élément de guidage (16, 17), galets parmi lesquels au moins un (26) peut être entraîné de telle sorte que la plate-forme de levage (8) se déplace en translation en synchronisme avec le chariot porteur (4).

3. Transstockeur selon la revendication 2, **caractérisé en ce que** l'élément de guidage (16, 17) est une bande plate.

4. Transstockeur selon la revendication 2, **caractérisé en ce que** l'élément de guidage est un câble.

5. Transstockeur selon la revendication 4, **caractérisé en ce qu'**au moins un galet de serrage possède une rainure recevant le câble.

6. Transstockeur selon la revendication 1, **caractérisé en ce que** l'élément de guidage est un câble s'étendant depuis l'un des dispositifs de levage jusqu'à l'autre dispositif de levage, câble qui, entre les dispositifs de levage, est enroulé en engagement par friction autour d'un tambour de câble entraîné, porté par la plate-forme de levage.

7. Transstockeur selon la revendication 1, **caractérisé en ce que** l'élément de guidage comprend deux câbles qui s'étendent respectivement depuis l'un des deux dispositifs de levage associés à l'élément de guidage jusqu'à la plate-forme de levage et qui peuvent être respectivement enroulés sur un tambour de câble entraîné de telle sorte que la plate-forme de levage se déplace en translation en synchronisme avec le chariot porteur et que les deux câbles sont tendus en permanence.

8. Transstockeur selon l'une des revendications précédentes, **caractérisé en ce que** les dispositifs de levage pour l'élément de guidage (16, 17) comprennent une bande sans fin (13) présentant un brin (13b) s'étendant verticalement auquel est fixée une extrémité respective de l'élément de guidage (16, 17).

9. Transstockeur selon la revendication 8, **caractérisé en ce que** la bande sans fin (13) peut être entraînée.

10. Transstockeur selon la revendication 8 ou 9, **caractérisé en ce qu'**au moins le brin (13b) s'étendant verticalement de la bande sans fin (13) est disposé à l'intérieur d'un profilé de guidage (11) s'étendant verticalement et est relié à l'extrémité associée de l'élément de guidage (16, 17) par l'intermédiaire d'un dispositif de liaison (18) qui présente au moins un galet de guidage (22), le galet de guidage (22) roulant sur une face intérieure du profilé de guidage (11).

11. Transstockeur selon l'une des revendications précédentes, **caractérisé en ce qu'**il est prévu deux éléments de guidage (16, 17) s'étendant parallèlement entre eux, qui peuvent être déplacés verticalement en synchronisme entre eux et avec la plate-forme de levage (8).

12. Transstockeur selon l'une des revendications précédentes, **caractérisé en ce que** les moyens de traction (7) par lesquels la plate-forme de levage (8) est suspendue au chariot porteur (4) sont flexibles, notamment sont des câbles, des bandes ou des chaînes.
